# FASCICULE DE BREVET EUROPEEN

(11) **EP 1 141 563 B1**
(45) Date de publication et mention de la délivrance du brevet: **28.08.2002**
(21) Numéro de dépôt: 99956093.1
(22) Date de dépôt: 19.11.1999
(51) Int. Cl.: F16B 39/20

(54) **PROCEDE ET DISPOSITIF POUR LE BLOCAGE ANTI-ROTATION D'UN ECROU SUR UNE TIGE FILETEE**
VERFAHREN UND ANORDNUNG ZUR SICHERUNG EINER MUTTER GEGEN DREHEN AUF EINER GEWINDESTANGE
METHOD AND DEVICE FOR ANTIROTATION LOCKING OF A NUT ON A THREADED ROD

(30) Priorité: 19.11.1998 FR 9814537
(43) Date de publication de la demande: 10.10.2001
(73) Titulaire: Constructions Brevetées d' Alfortville - CBA, 94140 Alfortville (FR)
(72) Inventeur: AGOSTINI, Jacques, F-91230 Montgeron (FR)
(74) Mandataire: Busnel, Jean-Benoît
(86) Numéro de dépôt international: FR9902849
(87) Numéro de publication internationale: WO00031425

(56) Documents cités:
- EP-A- 0 308 954
- FR-A- 344 134
- FR-A- 539 919
- US-A- 1 379 606

## Description

La présente invention concerne un dispositif pour le blocage anti-rotation d'un écrou sur une tige filetée.

Il existe des écrous comportant des orifices pratiqués sur leurs faces latérales et destinés au passage d'un fil-frein le plus souvent métallique.

Ce fil-frein est destiné à assurer la liaison rigide entre un écrou et un contre-écrou adjacent pour éviter que l'un d'entre eux ne se desserre pare rapport à l'autre.

Cependant, lorsque le couple de serrage est insuffisant ou lorsque le fil n'est pas assez tendu, cette solution ne permet pas d'éviter que l'écrou et son contre-écrou ne se desserrent conjointement.

Le document FR539919 divulgue un dispositif de blocage comprenant, d'une part, une rondelle pourvue d'un élément anti-rotation sous forme d'un bord droit qui vient au contact d'un méplat porté par la tige et, d'autre part, un écrou de serrage. Cependant, ni l'écrou de serrage ni la rondelle ne sont aptes à coopérer avec un fil-frein. Par conséquent, le verrouillage de la liaison n'est pas très fiable.

La présente invention a pour but de résoudre ce problème technique de manière satisfaisante.

Ce but est atteint selon l'invention au moyen d'un dispositif pour le blocage sur une tige filetée d'un écrou percé d'un orifice pour un fil-frein du type comprenant une rondelle pourvue d'un orifice central, d'au moins un orifice périphérique pour le passage dudit fil-frein et d'un élément anti-rotation destiné à coopérer avec un élément de profil complémentaire ménagé sur ladite tige,
caractérisé en ce que ledit élément anti-rotation de la rondelle est constitué d'un bord droit destiné à coopérer avec un méplat réalisé sur la tige parallèlement aux génératrices, et en ce que l'orifice de l'écrou débouche latéralement sur deux faces adjacentes.

Selon une caractéristique avantageuse, le diamètre de l'orifice central de la rondelle est légèrement supérieur au diamètre extérieur de la tige filetée.

Selon une autre caractéristique, le diamètre de la rondelle est supérieur au diamètre de l'écrou.

Un autre objet de l'invention est un procédé de blocage d'un écrou sur une tige filetée au moyen du dispositif, caractérisé en ce que :
- on monte la rondelle sur la tige en la positionnant à l'endroit choisi,
- on visse et on serre l'écrou jusqu'à ce qu'il soit au contact de la rondelle,
- et, on attache l'une des extrémités du fil-frein dans au moins l'un des orifices périphériques de la rondelle et l'autre extrémité dans l'un des orifices latéraux de l'écrou en mettant le fil sous tension.

Selon une variante de mise en oeuvre :
- on visse et on serre un écrou et un contre-écrou de part et d'autre de ladite rondelle,
- on attache les extrémités du fil-frein dans l'un des orifices latéraux respectifs de l'écrou et/ou du contre-écrou en le faisant passer par au moins l'un des orifices (10) de la rondelle.

Le dispositif de l'invention interdit toute possibilité de desserrage des écrous du fait que la rondelle est munie de moyens de blocage en rotation.

En outre, la rondelle est une pièce qui est réutilisable puisque son montage et son utilisation ne s'accompagnent d'aucune déformation ou détérioration.

L'invention sera mieux comprise à la lecture de la description qui va suivre accompagnée des dessins sur lesquels :
- la figure 1 représente une vue en perspective d'un mode de réalisation de la rondelle de l'invention à l'état libre ;
- les figures 2 et 3 représentent respectivement une vue en perspective et de profil d'une tige filetée équipée du dispositif de blocage d'écrou selon l'invention ;
- la figure 4 représente une vue en coupe partielle d'une variante de mise en oeuvre du procédé de l'invention.

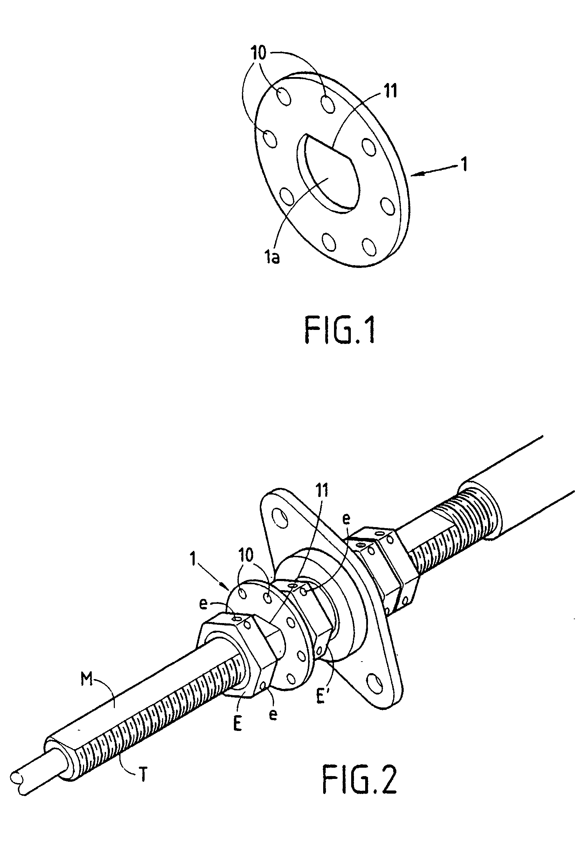

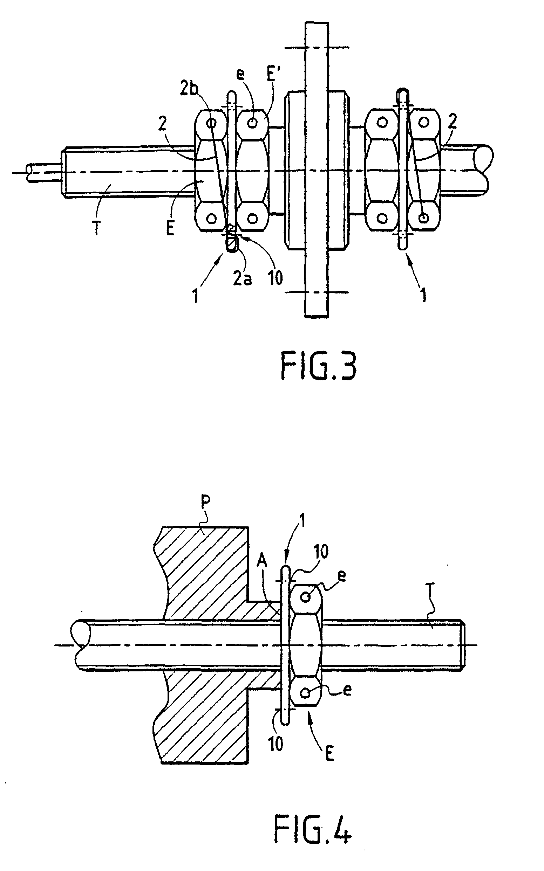

La rondelle 1 représentée sur la figure 1 est pourvue d'au moins un, et ici, d'une série de huit orifices périphériques traversants 10 pour le passage et/ou l'ancrage d'un fil-frein métallique 2 (représenté sur la figure 3).

La rondelle 1 est pourvue aussi d'un orifice central la délimité au moins partiellement par un bord anti-rotation 11 réalisé ici sous forme d'un bord droit ou rectiligne. Comme représenté sur la figure 2, le bord 11 est destiné à coopérer avec une face de profil complémentaire ménagée sur la tige filetée T et réalisée ici sous forme d'un méplat M.

Le méplat M s'étend longitudinalement et parallèlement aux génératrices de la tige T.

Un jeu d'écrou E et de contre-écrou E' comportant chacun des orifices latéraux e est destiné à être monté sur la tige T. Les orifices e débouchent latéralement sur deux faces adjacentes de l'écrou E.

Le diamètre de l'orifice central la de la rondelle 1 est légèrement supérieur au diamètre extérieur de la tige filetée T.

La tige T peut être introduite au travers de l'orifice central la de la rondelle 1 jusqu'à ce que cette dernière soit positionnée à l'endroit choisi sur ladite tige. Le montage de la rondelle 1 est effectué en prenant soin de visser et de serrer l'écrou E et le contre-écrou E' de part et d'autre de la rondelle et à son contact. Le diamètre de la rondelle 1 étant supérieur au diamètre des écrous E, E', on vient attacher l'une des extrémités 2a du fil frein 2 dans l'un des orifices périphériques 10 de la rondelle et l'autre extrémité 2b dans l'un des orifices latéraux e de l'un des écrous E, E' en mettant de préférence le fil sous tension.

Une variante de montage consiste à attacher les extrémités du fil-frein 2 dans les orifices latéraux e respectifs de l'écrou E et du contre-écrou E' en le faisant passer par l'un ou plusieurs des orifices 10 de la rondelle 1.

Une autre variante représentée sur la figure 4 consiste à monter la rondelle 1 sur la tige filetée T jusqu'à ce qu'elle soit en butée contre une face d'appui A portée par une paroi P. La face d'appui A est ici constituée par le bord d'extrémité d'une douille cylindrique entourant la tige T. L'écrou E est vissé sur la tige T puis serré au contact de la rondelle 1. Le fil-frein (non représenté sur cette figure) est ensuite introduit respectivement dans les orifices e de l'écrou E et dans les orifices 10 de la rondelle 1 puis mis sous tension et verrouillé. Ce mode de montage permet, par exemple de fixer un câble de commande à une traversée de paroi en évitant tout risque de jeu ultérieur.

## Revendications

1. Dispositif de blocage sur une tige filetée (T) du type comprenant un écrou (E,E') percé d'un orifice (e) pour un fil-frein (2) et une rondelle (1) pourvue d'un orifice central, d'au moins un orifice périphérique (10) pour le passage dudit fil-frein (2) et d'un élément anti-rotation (11) destiné à coopérer avec un élément (M) de profil complémentaire ménagé sur ladite tige (T),
**caractérisé en ce que** ledit élément anti-rotation (11) de la rondelle (1) est constitué d'un bord droit destiné à coopérer avec un méplat réalisé sur la tige (T) parallèlement aux génératrices, et **en ce que** l'orifice (e) de l'écrou (E,E') débouche latéralement sur deux faces adjacentes.

2. Dispositif selon la revendication 1, **caractérisé en ce que** le diamètre de l'orifice central (1a) de la rondelle (1) est légèrement supérieur au diamètre extérieur de la tige filetée (T).

3. Dispositif selon l'une des revendications précédentes, **caractérisé en ce que** le diamètre de la rondelle (1) est supérieur au diamètre de l'écrou (E,E').

4. Procédé de blocage d'un écrou sur une tige filetée (T) au moyen du dispositif selon l'une des revendications précédentes, **caractérisé en ce que** :
- on monte la rondelle (1) sur la tige (T) en la positionnant à l'endroit choisi,
- on visse et on serre l'écrou (E,E') jusqu'à ce qu'il soit au contact de la rondelle,
- et, on attache l'une des extrémités du fil-frein (2) dans au moins l'un des orifices périphériques (10) de la rondelle et l'autre extrémité dans l'un des orifices latéraux (e) de l'écrou en mettant le fil sous tension.

5. Procédé selon la revendication 4, **caractérisé en ce que** :
- on visse et on serre un écrou (E) et un contre-écrou (E') de part et d'autre de ladite rondelle (1),
- on attache les extrémités du fil-frein (2) dans l'un des orifices latéraux (e) respectifs de l'écrou (E) et/ou du contre-écrou (E') en le faisant passer par au moins l'un des orifices (10) de la rondelle.

## Patentansprüche

1. Vorrichtung zur Blockierung auf einem Schraubenbolzen (T), der Art mit einer Mutter (E, E'), die eine durchgehende Öffnung (e) für einen Sicherungsdraht (2) und eine Unterlegscheibe (1) aufweist, die mit einer mittleren Öffnung, mit mindestens einer umfangsseitigen Öffnung (10) für das Hindurchführen des Sicherungsdrahtes (2) versehen ist, und mit einem Element (11) gegen Verdrehung, das dazu vorgesehen ist, mit einem Element (M) von komplementärem Profil, das auf dem Bolzen (T) ausgestaltet ist, zusammenzuwirken,
**dadurch gekennzeichnet, dass** das Element (11) der Unterlegscheibe (1) gegen Verdrehung aus einer geraden Kante besteht, die dazu vorgesehen ist, mit einer Abflachung, die auf dem Bolzen (T) parallel zu den Mantellinien verläuft, zusammenzuwirken und dadurch, dass die Öffnung (e) der Mutter (E, E') seitlich auf zwei benachbarten Flächen mündet.

2. Vorrichtung nach Anspruch 1, **dadurch gekennzeichnet, dass** der Durchmesser der mittleren Öffnung (1a) der Unterlegscheibe (1) etwas größer ist als der Außendurchmesser des Schraubenbolzens (T).

3. Vorrichtung nach einem der vorhergehenden Ansprüche, **dadurch gekennzeichnet, dass** der Durchmesser der Unterlegscheibe (1) größer ist als der Durchmesser der Mutter (E, E').

4. Verfahren zur Blockierung einer Mutter auf einem Schraubenbolzen (T) mittels einer Vorrichtung nach einem der vorhergehenden Ansprüche, **dadurch gekennzeichnet, dass**:
- die Unterlegscheibe (1) auf dem Bolzen (T) befestigt wird, indem sie an der ausgewählten Stelle positioniert wird,
- die Mutter (E, E') aufgeschraubt und angezogen wird, bis sie mit der Unterlegscheibe in Kontakt ist,
- und eines der Enden des Sicherungsdrahtes (2) in mindestens einer der umfangsseitigen Öffnungen (10) der Unterlegscheibe und das andere Ende in einer der seitlichen Öffnungen (e) der Mutter befestigt wird, wobei der Draht gespannt wird.

5. Verfahren nach Anspruch 4, **dadurch gekennzeichnet, dass**:
- eine Mutter (E) und eine Gegenmutter (E') auf beiden Seiten der Unterlegscheibe (1) aufgeschraubt und angezogen werden,
- die Enden des Sicherungsdrahtes (2) in jeweils einer der seitlichen Öffnungen (e) der Mutter (E) und/oder der Gegenmutter (E') befestigt werden, wobei er durch mindestens eine der Öffnungen (10) der Unterlegscheibe hindurchgeführt wird.

## Claims

1. A device for locking a nut (E, E') on a threaded rod (T), the nut being pierced by an orifice (e) for a braking filament (2), the device being of the type comprising a washer (1) provided with a central orifice, at least one peripheral orifice (10) for passing said braking filament (2), and an antirotation element (11) for co-operating with an element (M) of complementary profile formed on the rod (T),
the device being **characterized in that** said antirotation element (11) of the washer (1) is constituted by a straight edge for co-operating with a flat formed on the rod (T) parallel to its generator lines, and **in that** the orifice (e) of the nut (E, E') opens out laterally in two adjacent faces.

2. A device according to claim 1, **characterized in that** the diameter of the central orifice (1a) of the washer (1) is slightly greater than the outside diameter of the threaded rod (T).

3. A device according to any preceding claim, **characterized in that** the diameter of the washer (1) is greater than the diameter of the nut (E, E').

4. A method of locking a nut on a threaded rod (T) by means of the device according to any preceding claim, the method being **characterized in that**:
· said washer (1) is mounted on the rod (T) and is positioned in the selected location;
· the nut (E, E') is screwed on and tightened so that it is in contact with the washer; and
· one of the ends of the braking filament (2) is attached in at least one of the peripheral orifices (10) of the washer and the other end is attached in one of the side orifices (e) of the nut, with the filament being put under tension.

5. A method according to claim 4, **characterized in that**:
· a nut (E) and a lock nut (E') are screwed on and tightened on opposite sides of said washer (1); and
· the ends of the braking filament (2) are attached in respective side orifices (e) of the nut (E) and/or of the lock nut (E'), while also passing through at least one of the orifices (10) of the washer.
